# EUROPEAN PATENT SPECIFICATION

(11) **EP 1 503 910 B1**
(45) Date of publication and mention of the grant of the patent: **03.08.2011**
(21) Application number: 02731286.7
(22) Date of filing: 08.04.2002
(51) Int. Cl.: B60C 9/22

(54) **PNEUMATIC TIRE CROWN REINFORCEMENT**
REIFENGÜRTELVERSTÄRKUNG
ARMATURE POUR SOMMET DE PNEU

(43) Date of publication of application: 09.02.2005
(73) Proprietor: Société de Technologie Michelin, 63000 Clermont-Ferrand (FR); Michelin Recherche et Technique S.A., 1763 Granges-Paccot (CH)
(72) Inventor: OSBORNE, Daniel, Grier, Greer, SC 29651 (US); BOOZER, Matthew, Easley, SC 29642 (US); ESNAULT, Philippe, Greenville, SC 29615 (US)
(74) Representative: Dequire, Philippe Jean-Marie Denis
(86) International application number: PCT/US2002/010929
(87) International publication number: WO 2003/086783

(56) References cited:
- EP-A- 0 335 588
- EP-A- 0 346 106
- EP-A- 0 698 510
- EP-A- 0 749 854
- EP-A- 0 790 143
- WO-A-01/15918

## Description

### BACKGROUND OF THE INVENTION

The invention relates to a pneumatic tire for vehicles, in particular a tire the architecture of which is optimized to provide good handling performance while retaining high-speed durability.

The patent application EP 0 790 143 describes a tire comprising a crown extended by two respective sidewalls and two respective beads, a carcass structure anchored in each side of the tire in said beads, said crown comprising at least one reinforcing ply having parallel reinforcements oriented at an angle α relative to the circumferential direction and a first crown reinforcement having cords substantially oriented in the circumferential direction, wherein the first crown reinforcement cords are made of a low elastic modulus organic fiber cord and the crown further comprises a pair of axially spaced edge plies made of high modulus organic fiber cords.

According to this document, the resulting tire has a substantially rounded ground contacting area and, as a consequence, good high-speed durability and handling performance.

### Document EP-A-0 335 588 discloses also a tire according to the preamble of claim 1.

It is an object of the invention to provide a tire having an improved control over its crown curvature and its ground contacting area and accordingly, which has improved handling performance while retaining high-speed durability.

### BRIEF SUMMARY OF THE INVENTION

According to the present invention, a tire in accordance with claim 1 is provided.

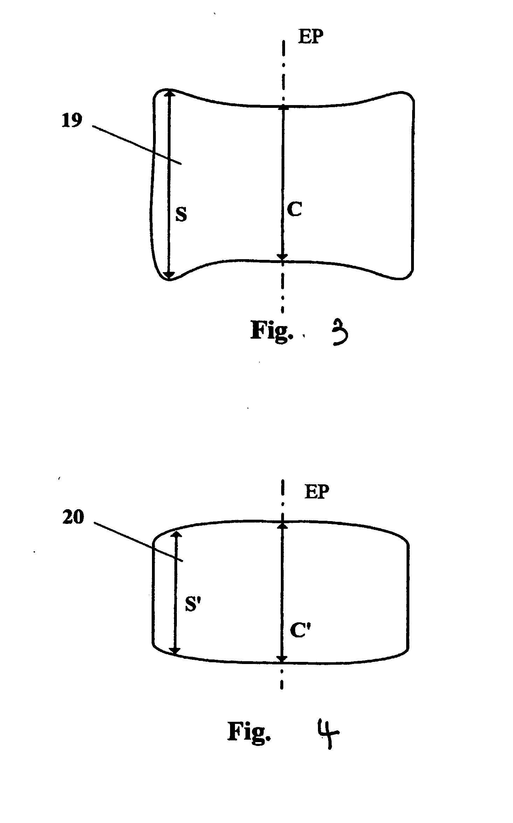

The ply having parallel reinforcements oriented at an angle α and the first crown reinforcement of the tire are designed in order to provide a very good high-speed (over 250 km/h) durability of the tire. In particular, as shown in Fig. 3, these high modulus at high stress cords prevent the ground contacting area 19 of the tire when running at very high speeds from having a center length C inferior to the shoulder length S. On the other hand, the shape of the ground contacting area 20 of the tire of the invention, as illustrated in Fig. 4, stays substantially rectangular or slightly oval. Its center length C' is superior to its shoulder length S'. The second crown reinforcement has the advantage to further flatten the transverse curvature of the outer contour of the crown of the tire when inflated and while running at low and moderate speeds (around and under 150 km/h). This provides improved dry handling and wear performances at low and medium speeds. At very high speeds, due to the high loads and stresses on the circumferential cords and due to the high temperature in the crown the effect of the second crown reinforcement in front of the loads supported by the first crown reinforcement is low and becomes nearly negligible. As a consequence, this second crown reinforcement does not significantly reduce the center length of the ground contacting area of the tire, which could reduce the high speed limit durability.

Advantageously, the second crown reinforcement cords are such that τ < 1.0 and preferably τ < 0.8. It is very advantageous to choose the cords with the value of τ as low as possible. This allows adjusting nearly independently the properties of the tire at low and moderates speeds and its properties at very high speeds.

According to a first embodiment, the second crown reinforcement being placed axially in the center part of the crown is preferably placed radially outside the first crown reinforcement.

In the case in which the crown of the tire has radially outwardly a tread with a pattern comprising a central rib, the second crown reinforcement is preferably placed axially under this rib.

According to another embodiments, the at least one reinforcing ply having parallel reinforcements oriented at an angle α relative to the circumferential direction is inserted radially between the first and second crown reinforcements.

The second crown reinforcement can be placed radially inwardly the at least one reinforcing ply having parallel reinforcements oriented at an angle α relative to the circumferential direction. This embodiment has the advantage to improve the handling properties of the tire at low and moderate speeds.

The first crown reinforcement can alternatively be placed radially inwardly the at least one reinforcing ply having parallel reinforcements oriented at an angle α relative to the circumferential direction. This embodiment has the advantage to lower the static stresses supported by the first crown reinforcement cords.

The tires of the invention, being in a similar position as when mounted on their design mounting rims, inflated at a nominal pressure and unloaded, have preferably the outer contour of their crown portion having a transverse concave profile with a substantially constant radius of curvature over 1.0 meter.

The cords of the second crown reinforcement have advantageously a diameter D between 0.5 and 1.5 mm and preferably between 0.7 and 1.2 mm. Their laying pitch p is advantageously such that D/p is between 0.5 and 0.9 and preferably between 0.7 and 0.9.

The tensile strength of the second crown reinforcement cords at a strain of 2.5 % and a temperature of 180 Celsius degrees is inferior to 2 daN and preferably inferior to 1.5 daN. The tensile strength of the second crown reinforcement cords at a strain of 1 % and a temperature of 80 Celsius degrees is preferably superior to 2 daN. This ensures that the ratio τ is under I and that the effect of the second crown reinforcement at high speed, i. e. at high temperature and stress is really negligible in front of the rigidity of the first crown reinforcement.

Such cords can be chosen in the group of PET and PEN polyesters with preferably PET polyesters. Preferably, said PET polyesters have a stress-strain characteristic with two maxima of tangent modulus, the strain of the second maxima being over 12 % and preferably over 14 %.

An example of such cords are PET HMLS (high modulus low shrinkage) cords with a high temperature contraction potential (CS) under 1 %.

The high elastic modulus at high strain cords can comprise nylon yarns associated with aramid yarns. They can also comprise only aramid cords.

The substantially circumferential oriented cords are preferably helically wound. Advantageously, the laying diameters of said cords depart by less than 0.5 % from the final diameters of said cords in the tire after vulcanization.

The tire of the invention is advantageously built on a rigid core having a crown portion and side portions wherein the outer contour of the crown portion is substantially cylindrical. This has the advantage to lower the static belt breaker edges stresses.

### BRIEF DESCRIPTION OF THE DRAWINGS

- Fig. 1 is a partial transverse cross section of a pneumatic tire according to the invention;
- Fig. 2 is a partial transverse cross section of a second embodiment of an inventive tire;
- Fig. 3 is a diagram showing the ground contacting area of a prior art tire running at high speeds;
- Fig. 4 is a diagram showing the ground contacting area of the tire of the invention;
- Fig. 5 is a plot of stress versus elongation for four types of cords; and
- Fig. 6 is a plot of stress and tangent modulus versus strain for a PET cord.

### DEFINITIONS

"Axial" and "axially" mean the lines or directions that are parallel to the axis of rotation of the tire.
"Circumferential" means lines or directions extending along the perimeter of the surface of the annular tread perpendicular to the axial direction.
"Equatorial plane (EP)" means the plane perpendicular to the tire's axis of rotation and passing through the center of its crown.
"Radial" and "radially" mean directions radially toward or away the axis of rotation of the tire.
"Cord" means both monofilaments and multifilaments, of assemblies such as cables, plied yarns or any other type of equivalent assemblies, and this-regardless of the material or treatment of these cords, for example, surface treatment or coating or dipping to promote adhesion to the rubber mixes.
"Compound" means a rubber mix having one or more base elastomer and additives selected in accordance with the properties of the compound desired for the zone of the tire it is used.
"Modulus of elasticity" of a rubber mix means the extension secant modulus at a strain of 10 % and a temperature of 20 degrees Celsius.
"Linear density" applied to a cord is the weight in grams per 1000 meters of the cord, stated of units of "tex".
"Modulus of elasticity" of a cord at a given strain or stress means the extension secant modulus calculated at the given strain or stress. The units used for the stress on a cord or the modulus of elasticity of a cord are centi-newton per tex (cN/tex). A high elastic modulus is considered as a secant elastic modulus over 1000 cN/tex and a low elastic modulus is considered as a secant elastic modulus under 600 cN/tex.
"Tangent modulus of elasticity" of a cord at a given strain or stress means the extension tangent modulus of said cord. At a given stress or strain, the tangent modulus of elasticity is the value of the slope of the tangent to the stress-strain curve.
"Winding pitch, p" applied to a substantially circumferentially oriented cord which is helically wound particularly in a large-diameter helical having as its main axis the main axis of the tire, is the transverse distance between the cord axes of the cords of two adjacent loops in the helical. "Laying density, d" is the reciprocal of the winding pitch and thus corresponds to the number of loops of a helically wound cord per unit axial length (along the main axis of the winding). Customarily, d is stated as the number of cords per decimeter (units of 1/dm), and p is stated in units of millimeters. Thus p = 100/d.
The "high-temperature contraction potential" called "CS" means the relative variation of length of a dipped cord positioned, under a prestress equal to the half-sum of the titers of each of the elementary fibers, between the shelves of an oven (TESTRITE type) regulated at a constant temperature of 185 ± 0.5°C. The CS is expressed in % by the following formula: CS (%) = 100 x | L₁ - L₀ |/ L₀ where L₀ is the initial length of the dipped cord at room temperature under a prestress equal to the half-sum of the titers of each of the elementary fibers and L₁ the length of that same cord at 185°C. The length L₁ is measured at the end of a stabilization time of the cord at temperature of 185°C equal to 120 s ± 2%. The standard deviation on the CS measurement is ± 0.15%.

That potential is the direct consequence of the series of operations that the reinforcements underwent on its manufacture or on its use.

### DETAILED DESCRIPTION OF THE INVENTION

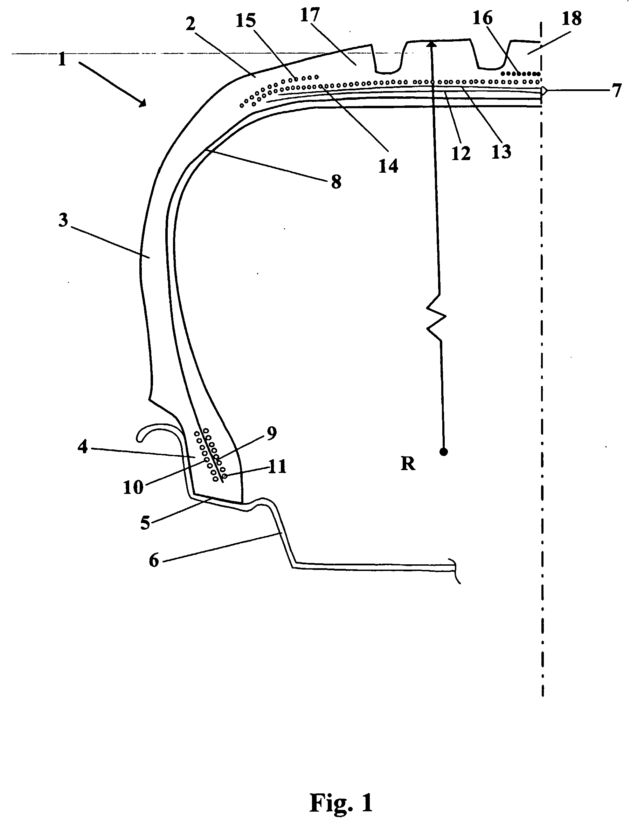

Fig. 1 is a partial transverse cross section of a pneumatic tire 1 according to the invention. This tire comprises a crown 2 extending to sidewall 3 and bead 4. The bead 4 has a seat 5 adapted to fit on the tire's design mounting rim 6. The crown comprises a breaker belt 7.

The tire comprises a carcass structure 8, extending from bead to bead or leaving a gap between two half structures, for instance in the substantially median portion of the crown. The radially inwardmost extent of the carcass structure 8 terminates in an anchoring zone 9 of the bead 4. In the embodiment of Figure 1, the carcass structure is not turned up around bead cores or other bead reinforcement. The carcass structure is anchored in the bead portion by bead reinforcement. A preferred embodiment of such reinforcement comprises a cord arrangement provided with at least one substantially circumferentially oriented cord 11 laterally bordering the carcass structure on at least one side. In the embodiment of figure 1, there are two circumferentially oriented cord windings 10 and 11 laterally bordering the carcass structure 8 on both sides. In this instance "anchored" in the bead portion means that the arrangement resists the tension developed in the carcass structure during inflated or deflated use of the tire by the adherence of the carcass reinforcing structure laterally with the cords 10 and 11 rather than being wound around a traditional bead core.

The mechanical properties of the anchoring zone 9 are optimized in using a bead filler having a very high creeping resistance at high stress and temperature.

Other examples of carcass anchorings or dispositions of the carcass layers in the bead portion have been disclosed in US 5,660,656 to Herbelleau et al and are incorporated herein by reference.

The tire of the invention advantageously utilizes a bead anchoring as described, but the carcass structure may also be turned up around bead cores.

The crown 2 comprises:
- a carcass structure 8;
- a breaker belt 7 disposed radially outside the carcass structure 8 and having in this embodiment two crossed plies 12, 13 of high elastic modulus at high stress cords, laid at angles α, β, from 27 to 37 degrees with respect of the circumferential rolling direction in parallel to each other but crosswise to the cords of the next ply, here α, β are in the order of +33 and -33 degrees, respectively; these cords are advantageously made of steel but aramid cords can also be used;
- an outer full-width ply 14 having cords substantially oriented in the circumferential direction made of high elastic modulus at high stress organic fiber cord;
- two edge plies 15 made of high elastic modulus at high stress cords, which are substantially circumferentially oriented;
- a center ply 16 made of low elastic modulus at high stress fiber cord oriented substantially in the circumferential direction and placed in the center part of the crown; and
- a tread 17 with a central rib 18.

The carcass structure is substantially oriented radially, i.e. at 90 degrees to the circumferential direction. The ply 16 is advantageously placed axially under the central rib 18 of the tread 17.

The plies 14 and 15 are made of high elastic modulus at high stress cords, which are helically wound in order to ensure a good stiffening hoop effect of the crown 2. These plies are preferably made of aramid cords, hybrid cords that associate nylon yam and aramid yarns may also be used. The pitch p of these plies is determined in order to have a very good high-speed durability.

The center ply 16 is made of a low elastic modulus at high stress cord, which is also helically wound. This cord is preferably a thermally contractible cord such as PET. Nylon cord may also be used.

When the tire is mounted on its design mounting rim 6, inflated to its nominal pressure but unloaded, the full-width ply 14, in combination with the edge plies 15, the center ply 16 and the angles α and β of the two crossed plies, provide the outer contour of the crown with a concave curvature which is substantially constant. The value of the radius of curvature R is about or over 1 meter. When loaded, the resulting ground contact area form 20 is substantially rectangular or slightly oval shaped as illustrated in Fig. 4. It has been found that such a rectangular shape 20 provides the tire with very good low or medium speeds dry handling and wear performances and good wet handling performances.

When the tire speed increases and reaches very high speeds, the centrifugal forces become very high, accordingly, the cords and the pitch p of the plies 14 and 15 are determined in order to be able to resist to these forces and to provide the ground contacting area with substantially always a rectangular/oval shape as presented in Fig. 4. This shape provides the tire with a very good high-speed durability.

The very high speed running of the tire imparts a high temperature in the crown due to the hysteresis of the compounds of the tire and notably of the tread. At this high temperature and under the high loads and stresses due to the high centrifugal forces, the stiffness of the center ply 16 becomes nearly negligible in front of the high stiffness of the high modulus plies 14 and 15. As a consequence, the additional crown reinforcement does not limit the length of the centerline (intersection with EP) of the ground contacting area of the tire.

Accordingly, the combination of the characteristics of the plies in the crown of the inventive tire provides it with an improved dry handling and wear performances at low and medium speeds while retaining a very good high-speed durability.

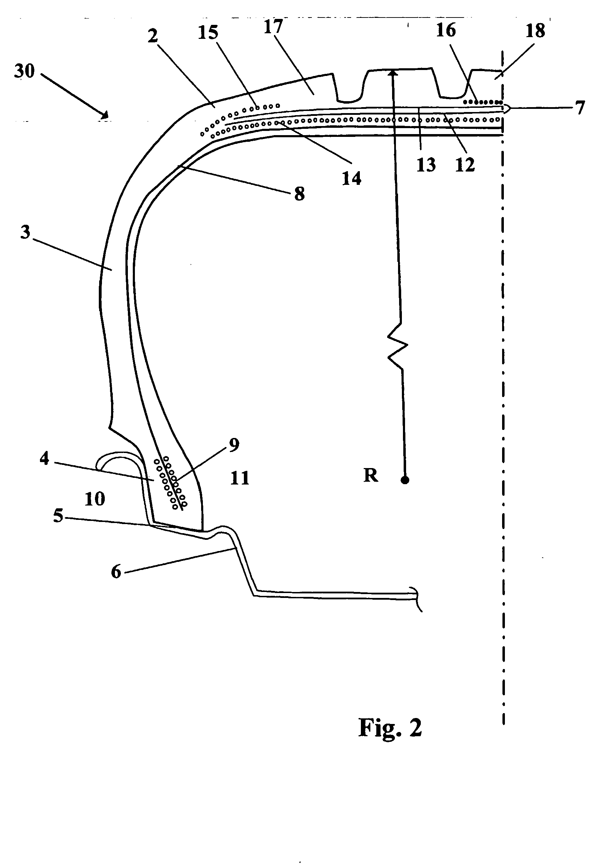

Fig. 2 presents a second embodiment of a tire 30 according to the invention in which the full-width ply 14 is placed radially under the breaker belt 7. This position improves the efficiency of the hoop effect of the circumferentially oriented cords of the ply 14.

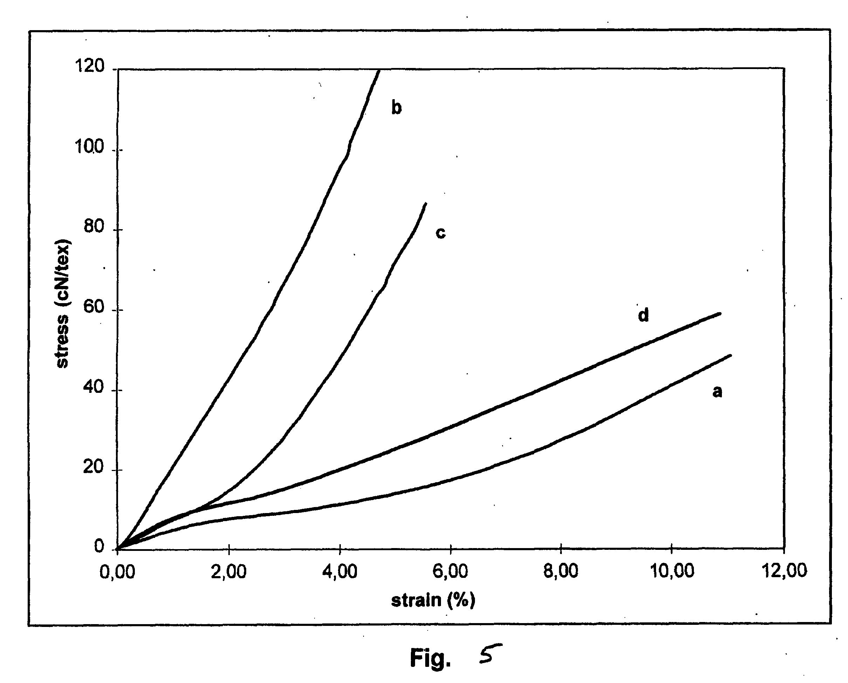

Fig. 5 presents the stress-elongation curves of four cords:
- curve a: nylon cord (two yarns of nylon);
- curve b: aramid cord (two aramid yarns);
- curve c: aramid-nylon cord; and
- curve d: polyester (PET) cord.

The nylon cord (curve a) is a dipped cord of 441 tex made from two identical nylon yarns of 210 tex individually twisted at 200 t/m in a first direction then simultaneously twisted at 200 t/m in the opposite direction. The initial modulus of elasticity of this cord is 530 cN/tex, the stress at a 4 % elongation is 10 cN/tex and its modulus of elasticity at this strain is 250 cN/tex. Thus the modulus of elasticity of this cord is low at low deformations as well as at appreciable deformations or stresses.

The aramid cord (curve b) is a dipped cord of 376 tex made from two identical aramid yarns of 167 tex individually twisted at 440 t/m in a first direction then simultaneously twisted at 440 t/m in the opposite direction. The initial modulus of elasticity of this cord is 2030 cN/tex, the stress at a 4% elongation is 80 cN/tex and its modulus of elasticity at this strain is 2000 cN/tex. This cord is characterized by a high modulus of elasticity at low and high stresses.

The aramid-nylon cord (curve c) is a dipped cord, which has a linear density of 521 tex. It is made from two identical aramid yarns of 167 tex individually twisted at 280 t/m (turns per meter) in a first direction and from one yarn of 140 tex twisted at 280 t/m in the same direction, these three yarns being further simultaneously twisted at 280 t/m in the opposite direction. The initial modulus of elasticity of this cord is 740 cN/tex, the stress developed at a 4 % elongation is 50 cN/tex and the modulus of elasticity at this strain is 1250 cN/tex. This cord has a medium modulus of elasticity at low elongation but a high modulus at high stress or elongation.

The PET cord (curve d) is a dipped cord, which has a linear density of 680 tex. It is made from four identical PET yarns of 167 tex. In a first stage, the yarns are assembled and twisted two by two at 200 t/m (turns per meter) in a first direction, then simultaneously twisted at 200 t/m in the opposite direction. The initial modulus of elasticity of this cord is 750 cN/tex but the stress developed at a 4% elongation is 20 cN/tex, the modulus of elasticity at this strain of 4 % is 500 cN/tex. This cord has a medium modulus of elasticity at low elongation and a low modulus at high stresses or elongation.

The following table 1 gives the mechanical properties of these four cords at 20 Celsius degrees:

**Table 1**

| Cord | Nylon | Aramid | Aramid-nylon | PET |
|---|---|---|---|---|
| | (a) | (b) | (c) | (d) |
| Initial modulus of elasticity (cN/tex) | 530 | 2030 | 740 | 750 |
| Modulus of elasticity at 4 % strain (cN/tex) | 250 | 2000 | 1250 | 500 |

The curves b and c illustrate the behavior of cords that may be used for the full-width ply and the edge plies of the crown. The high modulus of elasticity of these cords allows them to very well support the high centrifugal forces without the necessity of a high linear density of plies or of numerous plies.

The curves a and d illustrate the behavior of cords that may be used for the additional crown reinforcement. The pitch used for the center ply is determined in order to allow this ply to have a significant flattening influence on the transverse curvature of the crown of the tire at low or medium operating speeds. Obviously, the PET cord is preferable due to its higher low elongation modulus.

At high stresses or high strains, the cords a and d have a much lower modulus of elasticity than the aramid cords (curves b and c). This explains that the influence of the additional crown reinforcement is nearly negligible at very high speed running conditions. The difference is further increased by the different behavior of the nylon an PET cords with temperature. These curves are obtained at 20 Celsius degrees. At high temperatures, such as the temperatures reached in very high speed running conditions, these cords have an important diminution of their modulus of elasticity at high (and low) stresses. On the contrary, the aramid cords encounter a much lower decrease.

To demonstrate the invention, two 225/55 17 Pilot Sport® A/S model tires were manufactured, one with and one without an additional center crown reinforcement. The test results are presented in the following table 2.

**Table 2**

| Center ply | Wear resistance | Subjective Wet handling | Subjective Dry handling | Inflated R (m) |
|---|---|---|---|---|
| No | 100 | 100 | 100 | 0.6 |
| PET | 125 | 100 | 110 | 1.3 |

The tire according to the invention presents a very good wear resistance and subjective dry handling performances. It has also a good subjective wet handling performance similar to the performance of the reference tire.

It is advantageous to build the tire of the invention on a rigid support, for instance a rigid core imposing the shape of its inner cavity. All the components of the tire, which are disposed directly in their final place, are applied onto this core in the order required by the final architecture, without undergoing shaping at any moment of the building. In this case, the tire can be molded and vulcanized in the manner explained in US 4,895,692.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the scope of the appended claims.

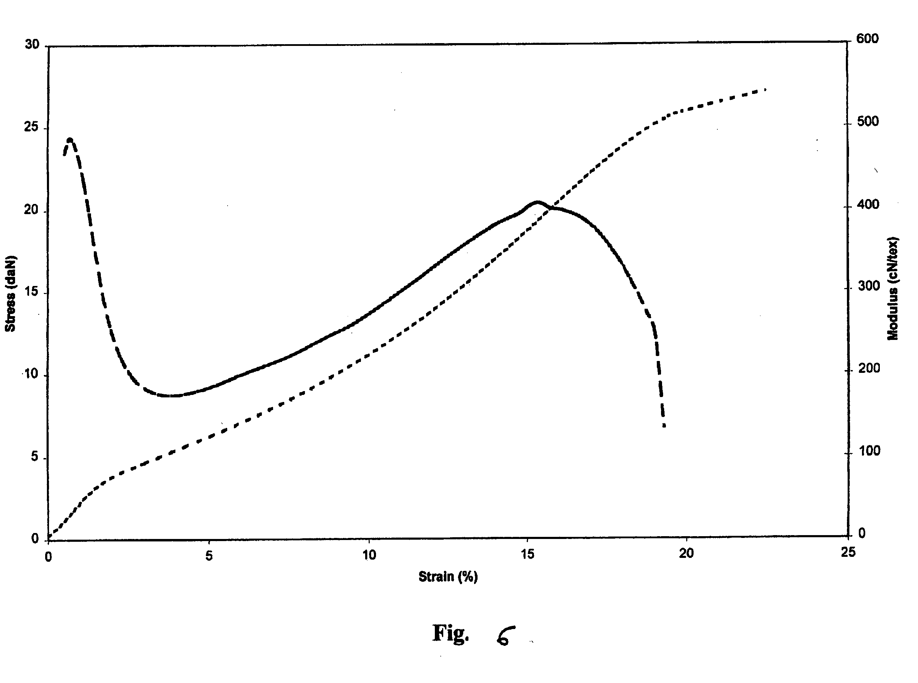

Fig. 6 is a plot of stress (a) and tangent (b) modulus versus strain for a PET cord. The PET cord has a stress-strain characteristic with two maxima of tangent modulus, the strain of the second maxima being over 14%.

## Claims

1. A tire (1, 30) comprising a crown (2) extended by two respective sidewalls (3) and two respective beads (4), a carcass structure (8) anchored in each side of the tire in said beads, said crown comprising:
- at least one reinforcing ply (12, 13) having parallel reinforcements oriented at an angle α relative to the circumferential direction ranging between 10 and 45 degrees,
- a first crown reinforcement (14) having cords substantially oriented in the circumferential direction and being organic fiber cords having a secant elastic modulus at 4% strain over 1000 cN/tex; and
- a second crown reinforcement (16) having organic fiber cords substantially oriented in the circumferential direction and having a secant elastic modulus at 4% strain under 600 cN/tex:
**characterized in that** the first crown reinforcement is a full-width ply, **in that** the second crown reinforcement is a center crown reinforcement placed axially in the center part of the crown, **in that** the second crown reinforcement cords have ratio τ of the tensile strength at high strain and high temperature, to the tensile strength at low strain and moderate temperatures inferior to 1.5, **in that** the tensile strength of the second crown reinforcement cords at a strain of 2.5 % and a temperature of 180 Celsius degrees is inferior to 2 daN and preferably inferior to 1.5 daN, and **in that** the tensile strength of the second crown reinforcement cords at a strain of 1 % and a temperature of 80 Celsius degrees is superior to 2 daN.

2. The tire of claim 1, wherein τ < 1.0.

3. The tire of claim 1, wherein τ < 0.8.

4. A tire (1, 30) according to any one of claims 1 to 34, wherein said second crown reinforcement (16) is placed radially outside the first crown reinforcement (14).

5. The tire of claim 4, wherein, said crown (2) having radially outwardly a tread (17) with a pattern comprising a central rib (18), said second crown reinforcement (16) is placed axially under said rib.

6. A tire (1, 30) according to any one of claims 1 to 5, wherein the crown further comprises a pair of axially spaced edge plies (15).

7. The tire (1, 30) of claim 6, wherein said pair of axially spaced edge plies (15) is made of cords of high elastic modulus at high stress and is substantially circumferentially oriented.

8. A tire according to any one of claims 1 to 7, wherein, the tire being in a similar position as when mounted on its design mounting rim, inflated at a nominal pressure and unloaded, the outer contour of the crown portion of the tire has a transverse concave profile with a substantially constant radius of curvature over 1.0 meter.

9. A tire according to any one of claims 1 to 8, wherein the second crown reinforcement cords are chosen in the group of the PET and PEN polyesters.

10. The tire of claim 9, wherein the second crown reinforcement cords are PET polyester cords.

11. The tire of claim 10, wherein said PET polyester cords have a stress-strain characteristic with two maxima of tangent modulus, the strain of the second maxima being over 12 % and preferably over 14 %.

12. The tire of claim 11, wherein the second crown reinforcement cords are PET HMLS cords with a high-temperature contraction potential under 1 %.

13. A tire according to any one of claim 1 to 12, wherein said substantially circumferential oriented cords are helically wound with laying diameters departing by less than 0.5 % from the final diameters of said cords in the tire after vulcanization.

14. A tire according to any one of claims 1 to 13, wherein said tire is built on a rigid core having a crown portion and side portions, and wherein the outer contour of said crown portion of the core is substantially cylindrical.

## Patentansprüche

1. Reifen (1, 30), der einen Gürtel (2), der durch zwei entsprechende Seitenwandungen (3) und zwei entsprechende Wülste (4) verlängert ist, eine Karkassenstruktur (8) umfasst, die an jeder Seite des Reifens in den Wülsten verankert ist, wobei der Gürtel Folgendes umfasst:
- mindestens eine verstärkende Lage (12, 13) mit parallelen Verstärkungen, die im Verhältnis zur Umfangsrichtung in einem Winkel α ausgerichtet sind, der zwischen 10 und 45 Grad beträgt,
- eine erste Gürtelverstärkung (14) mit Corden, die im Wesentlichen in Umfangsrichtung ausgerichtet sind und Corde aus organischen Fasern sind, die ein Sekanten-Elastizitätsmodul von über 1000 cN/tex bei 4 % Dehnung aufweisen, und
- eine zweite Gürtelverstärkung (16) mit Corden aus organischen Fasern, die im Wesentlichen in Umfangsrichtung ausgerichtet sind und ein Sekanten-Elastizitätsmodul von unter 600 cN/tex bei 4 % Dehnung aufweisen,
**dadurch gekennzeichnet, dass** die erste Gürtelverstärkung eine Lage über die gesamte Breite ist, dass die zweite Gürtelverstärkung eine mittige Gürtelverstärkung ist, die axial im mittigen Teil des Gürtels platziert ist und dass die Corde der zweiten Gürtelverstärkung ein Verhältnis τ der Reißfestigkeit bei hoher Dehnung und hoher Temperatur zur Reißfestigkeit bei geringer Dehnung und moderater Temperatur von unter 1,5 aufweisen, dass die Reißfestigkeit der Corde der zweiten Gürtelverstärkung bei einer Dehnung von 2,5 % und einer Temperatur von 180 °C unter 2 daN liegt und vorzugsweise unter 1,5 daN und dass die Reißfestigkeit der Corde der zweiten Gürtelverstärkung bei einer Dehnung von 1 % und einer Temperatur von 80 °C über 2 daN liegt.

2. Reifen nach Anspruch 1, wobei τ <1,0 ist.

3. Reifen nach Anspruch 1, wobei τ <0,8 ist.

4. Reifen (1, 30) nach einem der Ansprüche 1 bis 3, wobei die zweite Gürtelverstärkung (16) radial auswärts von der ersten Gürtelverstärkung (14) angeordnet ist.

5. Reifen nach Anspruch 4, wobei der Gürtel (2) radial auswärts ein Profil (17) mit einem Muster aufweist, das eine mittige Rippe (18) aufweist, wobei die zweite Gürtelverstärkung (16) axial unter der Rippe platziert ist.

6. Reifen (1, 30) nach einem der Ansprüche 1 bis 5, wobei der Gürtel ferner ein Paar axial beabstandeter Randlagen (15) umfasst.

7. Reifen (1, 30) nach Anspruch 6, wobei das Paar axial beabstandeter Randlagen (15) aus Corden mit hohem Elastizitätsmodul bei hoher Spannung hergestellt ist und im Wesentlichen in Umfangsrichtung ausgerichtet ist.

8. Reifen nach einem der Ansprüche 1 bis 7, wobei, wenn sich der Reifen in einer ähnlichen Position befindet, wie wenn er auf seine vorgesehene Montagefelge montiert, bis zum Nominaldruck aufgepumpt und unbelastet ist, die Außenkontur des Gürtelabschnitts des Reifens ein quer verlaufendes konkaves Profil mit einem im Wesentlichen gleich bleibenden Krümmungsradius von über 1,0 Meter aufweist.

9. Reifen nach einem der Ansprüche 1 bis 8, wobei die Corde der zweiten Gürtelverstärkung aus der Gruppe der PET- und PEN-Polyester ausgewählt sind.

10. Reifen nach Anspruch 9, wobei die Corde der zweiten Gürtelverstärkung PET-Polyester-Corde sind.

11. Reifen nach Anspruch 10, wobei die PET-Polyester-Corde eine Spannungs-Dehnungs-Kennlinie mit zwei Maxima des Tangentenmoduls aufweist, wobei die Dehnung des zweiten Maximums über 12 % und vorzugsweise über 14 % liegt.

12. Reifen nach Anspruch 11, wobei die Corde der zweiten Gürtelverstärkung PET-HMLS-Corde mit einem Hochtemperatur-Kontraktionspotential von unter 1 % sind.

13. Reifen nach einem der Ansprüche 1 bis 12, wobei die im Wesentlichen in Umfangsrichtung ausgerichteten Corde spiralförmig gewunden sind mit einem Schlagdurchmesser, der nach der Vulkanisierung weniger als 0,5 % vom endgültigen Durchmesser der Corde im Reifen abweicht.

14. Reifen nach einem der Ansprüche 1 bis 13, wobei der Reifen auf einem steifen Kern mit einem Gürtelabschnitt und Seitenabschnitten aufgebaut ist und wobei die Außenkontur des Gürtelabschnitts des Kerns im Wesentlichen zylindrisch ist.

## Revendications

1. Pneumatique (1, 30) comprenant
un sommet (2) prolongé par deux flancs respectifs (3) et deux bourrelets respectifs (4) et
une structure de carcasse (8) ancrée de chaque côté du pneumatique dans lesdits bourrelets,
ledit sommet comprenant :
- au moins une nappe de renfort (12, 13) qui présente des renforts parallèles dont l'orientation par rapport à la direction circonférentielle forme un angle α compris entre 10 et 45°,
- un premier renfort de sommet (14) dont les câbles sont orientés essentiellement dans la direction circonférentielle et sont des câbles de fibres organiques dont le module élastique sécant à une déformation de 4 % est supérieur à 1 000 cN/tex et
- un deuxième renfort de sommet (16) dont les câbles en fibres organiques sont orientés essentiellement dans la direction circonférentielle et dont le module élastique sécant à une déformation 4 % est inférieur à 600 cN/tex,
**caractérisé en ce que**
le premier renfort de sommet est une nappe de pleine largeur,
**en ce que** le deuxième renfort de sommet est un renfort central de sommet placé axialement dans la partie centrale du sommet,
**en ce que** les deuxièmes câbles de renfort de sommet ont un rapport τ entre la résistance en traction à haute déformation et haute température et la résistance en traction à faible déformation et température modérée inférieur à 1,5,
**en ce que** la résistance en traction des deuxièmes câbles de renfort de sommet à une déformation de 2,5 % et une température de 180 degrés Celsius est inférieure à 2 daN et de préférence inférieure à 1,5 daN et
**en ce que** la résistance en traction des deuxièmes câbles de renfort de sommet à une déformation de 1 % et une température de 80 degrés Celsius est supérieure à 2 daN.

2. Pneumatique selon la revendication 1, dans lequel τ < 1,0.

3. Pneumatique selon la revendication 1, dans lequel τ 0,8.

4. Pneumatique (1, 30) selon l'une quelconque des revendications 1 à 3, dans lequel ledit deuxième renfort de sommet (16) est disposé radialement à l'extérieur du premier renfort de sommet (14).

5. Pneumatique selon la revendication 4, dans lequel ledit sommet (2) présentant radialement à l'extérieur une bande de roulement (17) dont le motif comprend une nervure centrale (18), ledit deuxième renfort de sommet (16) est placé axialement en dessous de ladite nervure.

6. Pneumatique (1, 30) selon l'une quelconque des revendications 1 à 5, dans lequel le sommet comprend en outre deux nappes de bord (15) séparées axialement l'une de l'autre.

7. Pneumatique (1, 30) selon la revendication 6, dans lequel ladite paire de nappes de bord (15) séparées axialement est constituée de câbles à haut module élastique à haute déformation et est essentiellement orientée dans la direction circonférentielle.

8. Pneumatique selon l'une quelconque des revendications 1 à 7, dans lequel, le pneumatique étant en une position similaire à celle montée sur la jante de montage qui lui correspond, gonflé à pression nominale et non chargé, le contour extérieur de la portion de sommet du pneumatique présente un profil transversal concave dont le rayon de courbure essentiellement constant est supérieur à 1,0 mètre.

9. Pneumatique selon l'une quelconque des revendications 1 à 8, dans lequel les deuxièmes câbles de renfort de sommet sont sélectionnés dans l'ensemble constitué des polyesters PET et PEN.

10. Pneumatique selon la revendication 9, dans lequel les deuxièmes câbles de renfort de sommet sont des câbles de polyester PET.

11. Pneumatique selon la revendication 10, dans lequel lesdits câbles de polyester PET ont une caractéristique contrainte-déformation qui présente deux maximums de modules tangents, la déformation du deuxième maximum étant supérieure à 12 % et de préférence supérieure à 14 %.

12. Pneumatique selon la revendication 11, dans lequel les deuxièmes câbles de renfort de sommet sont des câbles de PET HMLS dont le potentiel de contraction à haute température est inférieur à 1 %.

13. Pneumatique selon l'une quelconque des revendications 1 à 12, dans lequel lesdits câbles orientés essentiellement dans la direction circonférentielle sont enroulés en hélice, le diamètre de pose s'écartant de moins de 0,5 % du diamètre final desdits câbles après que le pneumatique a été vulcanisé.

14. Pneumatique selon l'une quelconque des revendications 1 à 13, dans lequel ledit pneumatique est monté sur un noyau rigide qui présente une partie de sommet et des parties latérales, le contour extérieur de ladite partie de sommet du noyau étant essentiellement cylindrique.
